# EUROPÄISCHE PATENTANMELDUNG

(11) **EP 2 860 836 A2**
(43) Veröffentlichungstag der Anmeldung: **15.04.2015**
(21) Anmeldenummer: 14188532.7
(22) Anmeldetag: 10.10.2014
(51) Int. Cl.: H02H 3/00, H02J 3/38

(54) **Sicherheitsschaltung für ein explosionsgeschütztes Gehäuse und Verfahren zu deren Betrieb**

(30) Priorität: 10.10.2013 DE 102013111212
(71) Anmelder: R. Stahl Schaltgeräte GmbH, 74638 Waldenburg (DE)
(72) Erfinder: Köllreutter, Ralf, 74074 Heilbronn (DE)
(74) Vertreter: Rüger, Barthelt & Abel

(57) **Zusammenfassung**

Die Erfindung betrifft eine Sicherheitsschaltung (10) zur Verwendung in einem explosionsgeschützten Gehäuse (12). Die Sicherheitsschaltung (10) dient zur Entladung einer Kondensatoranordnung mit wenigstens einem Kondensator (19), der einem elektrischen Betriebsmittel (11) zugeordnet ist oder zu diesem elektrischen Betriebsmittel (11) gehört. Über die Sicherheitsschaltung (10) wird der wenigstens eine Kondensator (19) nach dem Abschalten einer Versorgungsspannung (UV) an einem Versorgungseingang (13) über einen Entladungsstromkreis (33) während einer Entladungszeitdauer (ET) definiert entladen. Nach dem Ende der Entladungszeitdauer (ET) ist die elektrische Ladung bzw. die elektrische Energie des wenigstens einen Kondensators (19) ausreichend klein, dass ein Zünden der explosionsgefährdeten Atmosphäre in der Umgebung des explosionsgeschützten Gehäuses (12) ausgeschlossen ist.

## Beschreibung

Die Erfindung betrifft eine Sicherheitsschaltung zur Verwendung in oder mit einem explosionsgeschützten Gehäuse sowie ein Verfahren zum Betreiben der Sicherheitsschaltung. Bei dem explosionsgeschützten Gehäuse handelt es sich insbesondere um eine druckfeste Kapselung (Ex-d) oder um eine Überdruckkapselung (Ex-p). In dem Gehäuse sind elektrische Betriebsmittel angeordnet, die eine Zündquelle für eine explosionsgefährdete Atmosphäre darstellen können. Durch den Schutz des explosionsgeschützten Gehäuses können solche Betriebsmittel auch in Umgebungen betrieben werden, die eine explosionsgefährdete Atmosphäre aufweisen. Das Gehäuse sorgt dafür, dass die elektrischen Betriebsmittel keine Zündung der explosionsgefährdeten Atmosphäre verursachen können.

Das elektrische Betriebsmittel im Gehäuse können dort Kondensatoren aufweisen. Problematisch ist dabei, dass eine im Kondensator elektrische Energie auch nach dem Abschalten einer Versorgungsspannung für das elektrische Betriebsmittel gespeichert sein kann. Das Öffnen des Gehäuses innerhalb der explosionsgefährdeten Atmosphäre kann einen gefährlichen Zustand erzeugen, wenn die im Kondensator gespeicherte elektrische Energie noch zu groß ist. Das Gehäuse darf innerhalb einer explosionsgefährdeten Atmosphäre erst dann geöffnet werden, wenn sich der Kondensator ausreichend entladen hat.

Die Ladungsmenge im Kondensator ist aber in der Regel nicht bekannt. Die Selbstentladung des Kondensators kann je nach seiner Bauart und abhängig von seiner äußeren Beschaltung sehr lange sein. Häufig sind Informationen über elektrische Betriebsmittel und Entladezeiten von verwendeten Kondensatoren nicht oder nur schwer verfügbar. Dies kann zu Einschränkungen bei der Auswahl an Betriebsmitteln führen, die in explosionsgeschützten Gehäusen eingesetzt werden können. Diese Nachteile sollen durch die vorliegende Erfindung behoben werden. Es kann als Aufgabe der vorliegenden Erfindung angesehen werden, eine Sicherheitsschaltung für ein explosionsgeschütztes Gehäuse bzw. für die darin angeordneten elektrischen Betriebsmittel mit wenigstens einem Kondensator zu schaffen, die eine verbesserte Anwendung mit hoher Sicherheit gewährleistet.

Erfindungsgemäß weist die Sicherheitsschaltung eine Steuereinheit auf. Die Steuereinheit ist an einen Versorgungseingang angeschlossen, an dem eine Versorgungsspannung bereitgestellt werden kann.

Die Versorgungsspannung kann beispielsweise eine Netzspannung oder eine Ausgangsspannung einer Versorgungseinrichtung sein. Beispielsweise wird bei überdruckgekapselten Gehäusen die Versorgungsspannung nach dem Einschalten einer Netzspannung durch eine Versorgungseinrichtung erst dann freigegeben, wenn sich das Gehäuse im Zustand der Überdruckkapselung befindet, also nach dem Spülen des Gehäuseinnenraums mit einem Inertgas. Die Versorgungseinrichtung kann bei anderen Gehäusen auch unmittelbar nach dem Anlagen der Netzspannung bereitgestellt werden. Die Versorgungseinrichtung kann zudem auch einen Wandler aufweisen, um die Netzspannung in eine für die Betriebsmittel geeignete Gleich- oder Wechselspannung zu wandeln. Somit kann die Versorgungsspannung entweder immer dann verfügbar sein, wenn auch die Netzspannung verfügbar ist oder erst dann, wenn sich das Gehäuse im explosionsgeschützten Zustand befindet. In beiden Fällen kann optional eine Versorgungseinrichtung zum Bereitstellen der Versorgungsspannung vorhanden sein.

In dem explosionsgeschützten Gehäuse ist wenigstens ein elektrisches Betriebsmittel angeordnet. Ein Kondensator gehört zu dem elektrischen Betriebsmittel oder ist dem elektrischen Betriebsmittel zugeordnet. Bei dem elektrischen Betriebsmittel kann es sich beispielsweise um eine Spannungsversorgungseinrichtung oder einen Elektromotor handeln. Prinzipiell kann die erfindungsgemäße Sicherheitsschaltung für alle elektrischen Betriebsmittel verwendet werden, die wenigstens einen Kondensator aufweisen oder denen wenigstens ein Kondensator zugeordnet ist. Der Kondensator lädt sich auf eine Kondensatorspannung auf. Das Laden des Kondensators kann abhängig vom Anwendungsfall bereits dann erfolgen, wenn am Versorgungseingang eine Versorgungsspannung anliegt. Alternativ hierzu kann der Kondensator erst dann auf die Kondensatorspannung aufgeladen werden, wenn das zugeordnete elektrische Betriebsmittel eingeschaltet oder betrieben wird. Dies hängt davon ab, wie der Kondensator elektrisch mit dem Versorgungseingang verbunden ist.

Die Sicherheitsschaltung weist eine Reihenschaltung aus einem gesteuerten Schalter und einem Entladungswiderstand auf. Die Reihenschaltung ist an den wenigstens einen Kondensator angeschlossen und bildet mit diesem einen Entladungsstromkreis. In einer Trennstellung unterbricht der gesteuerte Schalter eine durchgängige elektrische Verbindung im Entladungsstromkreis, so dass kein Entladungsstrom vom Kondensator durch den Entladungswiderstand fließen kann. In einer Schließstellung ist der Entladungsstromkreis elektrisch geschlossen und der wenigstens eine Kondensator kann mittels eines Entladungsstromes durch den Entladungswiderstand entladen werden.

Die Steuereinheit ist dazu eingerichtet, den gesteuerten Schalter nach dem Abschalten der Versorgungsspannung in die Schließstellung umzuschalten, um den wenigstens einen Kondensator zu entladen. Die Steuereinheit erkennt das Abschalten oder Fehlen der Versorgungsspannung durch ihre elektrische Verbindung mit dem Versorgungseingang. Allein das Abschalten der Versorgungsspannung führt nicht unmittelbar zu einem sicheren, ungefährlichen Zustand des elektrischen Betriebsmittels bzw. des Kondensators. Deswegen wird zunächst der Entladungsstromkreis geschlossen und der Kondensator entladen. Das Gehäuse darf durch eine Bedienperson erst nach Ablauf einer Entladungsdauer geöffnet werden. Die Entladungsdauer kann abhängig von der Kapazität des Kondensators, von dem Betrag des Ohmschen Widerstands des Entladungswiderstands, von der Kondensatorspannung, von dem maximal zulässigen Entladungsstrom und/oder weiteren Parametern ermittelt werden. Der Betrag des Ohmschen Widerstandes kann abhängig von der zulässigen Temperatur des wenigstens einen Kondensators bzw. der Bauteile im Entladungsstromkreis vorgegeben werden. Nach Ablauf der Entladezeitdauer ist gewährleistet, dass die im Kondensator gespeicherte Restenergie ausreichend klein ist, um eine Zündung der explosionsgefährdeten Atmosphäre auszuschließen. Das Gehäuse kann jetzt geöffnet werden.

Es ist dabei auch möglich, der Bedienperson den Ablauf der Entladezeitdauer durch ein Anzeigemittel anzuzeigen, beispielsweise optisch und/oder akustisch. Zusätzlich oder alternativ besteht auch die Möglichkeit, eine Verriegelungseinrichtung erst nach Ablauf der Entladungszeitdauer freizugeben, so dass ein vorheriges Öffnen des Gehäuses verhindert wird. Im einfachsten Fall kann für die Bedienperson eine Wartezeit auf dem Gehäuse angegeben werden, nach der das Gehäuse seit dem Abschalten der Netz- oder Versorgungsspannung geöffnet werden darf. Die Wartezeit ist dabei mindestens so lang wie die Entladungszeitdauer, abhängig davon, ob das Entladen des wenigstens einen Kondensators unverzüglich nach dem Abschalten der Netz- oder Versorgungsspannung erfolgt.

Der Entladungswiderstand ist vorzugsweise von einem Ohmschen Widerstand gebildet. Grundsätzlich können aber auch andere Bauelemente oder eine Kombination von mehreren Bauelementen, die einen Ohmschen Gesamtwiderstand aufweisen, eingesetzt werden.

Vorzugsweise ist die Steuereinheit dazu eingerichtet, den gesteuerten Schalter nach dem Abschalten der Versorgungsspannung erst dann in die Schließstellung umzuschalten, wenn eine Umschaltbedingung erfüllt ist. Als Umschaltbedingung kann beispielsweise das Vorliegen eines Rückmeldesignals des elektrischen Betriebsmittels und/oder eine vorgegebene Verzögerungszeitdauer seit dem Abschalten der Versorgungsspannung verwendet werden. Dies ist insbesondere dann vorteilhaft, wenn der wenigstens eine Kondensator einer Spannungsversorgungseinrichtung zugeordnet ist, die eine unterbrechungsfreie Spannungsversorgung eines weiteren, zu versorgenden elektrischen Betriebsmittels sicherstellen soll. Nach dem Abschalten der Versorgungsspannung wird das zu versorgende elektrische Betriebsmittel von der Spannungsversorgungseinrichtung somit noch weiterhin mit ausreichender elektrischer Energie versorgt. Dies kann insbesondere notwendig sein, wenn das zu versorgende elektrische Betriebsmittel in einen definierten und/oder sicheren Betriebszustand gebracht werden muss, nach dem die Versorgungsspannung abgeschaltet wurde oder ausgefallen ist. Die hierfür notwendige Zeitdauer kann vorgegeben werden und als Verzögerungszeitdauer verwendet werden, so dass die Umschaltbedingung erst nach Ablauf dieser Verzögerungszeitdauer erfüllt ist. Erst dann sorgt die Steuereinheit dafür, dass der gesteuerte Schalter in seine Schließstellung umschaltet, um den wenigstens einen Kondensator zu entladen. Alternativ oder zusätzlich kann das elektrische Betriebsmittel der Steuereinheit über das Rückmeldesignal anzeigen, dass eine fortgesetzte Versorgung mit elektrischer Energie nicht mehr erforderlich ist, z.B. wenn ein sicherer oder definierter Zustand erreicht wurde. Das Vorliegen eines solchen Rückmeldesignals kann daher zur Erfüllung der Umschaltbedingung notwendig oder hinreichend sein.

Alternativ hierzu ist es auch möglich, den gesteuerten Schalter unverzüglich nach dem Abschalten der Versorgungsspannung in die Schließstellung umzuschalten, wenn der wenigstens eine Kondensator nicht zu einer weiteren Versorgung von elektrischen Betriebsmitteln mit elektrischer Energie benötigt wird.

Bei einem bevorzugten Ausführungsbeispiel ist die Steuereinheit dazu eingerichtet, den gesteuerten Schalter unverzüglich nach dem Einschalten der Versorgungsspannung in die Trennstellung umzuschalten. Dadurch wird sofort nach dem Einschalten der Versorgungsspannung ein Laden des wenigstens einen Kondensators möglich.

Unter dem Begriff "unverzüglich" ist eine zeitliche Abfolge zu verstehen, die keine zusätzlichen Totzeiten, bzw. bewusst vorgegebene Verzögerungen enthält, sondern die lediglich solche Verzögerungen enthält, die sich durch die verwendeten technischen Mittel notwendigerweise ergeben.

Es ist vorteilhaft, wenn die Steuereinheit einen Steuerungsteil eines Relais aufweist. Dabei kann der gesteuerte Schalter die Arbeits- oder Lastkontakte des Relais aufweisen, deren Schaltstellung vom Steuerungsteil gesteuert wird.

Bei einem Ausführungsbeispiel kann es sich bei dem Relais insbesondere um ein zeitgesteuertes Relais handeln. Das zeitgesteuerte Relais ist vorzugsweise als abfallverzögertes Relais ausgeführt, das nach dem Abschalten einer Spannung an dem Steuerungsteil des Relais zeitverzögert abfällt. Das Anziehen des Relais kann nach dem Anlegen einer Spannung an den Steuerungsteil des Relais unverzüglich erfolgen.

Bei einem bevorzugten Ausführungsbeispiel ist der wenigstens eine Kondensator Bestandteil eines elektrischen Betriebsmittels, das von einer Spannungsversorgungseinrichtung gebildet ist. Dabei sind insbesondere mehrere Kondensatoren vorhanden, die in Reihe und/oder parallel zueinander angeordnet sind und eine Kondensatorbank bilden. Die Spannungsversorgungseinrichtung ist vorzugsweise als unterbrechungsfreie Spannungsversorgung ausgeführt, bei der der wenigstens eine Kondensator als Energiepufferspeicher für ein zu versorgendes elektrisches Betriebsmittel dient, das an die Spannungsversorgungseinrichtung angeschlossen ist.

Bei einem bevorzugten Ausführungsbeispiel kann das Entladen des wenigstens einen Kondensators nach dem Abschalten der Versorgungsspannung und/oder nach dem Erfüllen einer Umschaltbedingung parameterabhängig gesteuert oder geregelt werden. Beispielsweise kann der Entladungsstrom im Entladungsstromkreis und/oder die Temperatur des wenigstens einen Kondensators und/oder die Kondensatorspannung als Parameter zur Steuerung oder Regelung der Entladung dienen. Beispielsweise kann der Entladungswiderstand als temperaturabhängiger Widerstand ausgeführt sein, der thermisch mit dem wenigstens einen Kondensator gekoppelt ist. Auf diese Weise kann der Entladungsstrom in der Abhängigkeit von der Temperatur des wenigstens einen Kondensators eingestellt werden.

Es ist auch möglich, als Betriebsmittel einen Elektromotor mit einem Anlaufkondensator vorzusehen. Der wenigstens eine Kondensator kann somit den Anlaufkondensator des Elektromotors darstellen. Der Anlaufkondensator wird nur zum Anlaufen des Elektromotors verwendet und kann nach dem Ende der Anlaufphase zumindest teilweise geladen sein. Ein solcher Kondensator kann über die Sicherheitsschaltung wie vorstehend beschrieben entladen werden.

Vorteilhafte Ausgestaltungen der Erfindung ergeben sich aus den abhängigen Patentansprüchen, der Beschreibung sowie der Zeichnung. Nachfolgend werden Ausführungsbeispiele der Erfindung anhand der beigefügten Zeichnung im Einzelnen erläutert. Es zeigen:
Figuren 1 bis 4 jeweils ein Blockschaltbild eines Ausführungsbeispiels einer Sicherheitsschaltung für ein elektrisches Betriebsmittel in einem explosionsgeschützten Gehäuse,
Figur 5 ein Blockschaltbild, das ein elektrisches Betriebsmittels mit einem Elektromotor und einem Anlaufkondensator sowie eine Ausführungsform einer Sicherheitsschaltung darstellt, und
Figur 6 ein schematisches Diagramm des Umschaltens eines gesteuerten Schalters der Sicherheitsschaltung in zeitlichem Bezug zu dem Ein- und Ausschalten einer Versorgungsspannung für das explosionsgeschützte Gehäuse bzw. für das elektrischen Betriebsmittel.

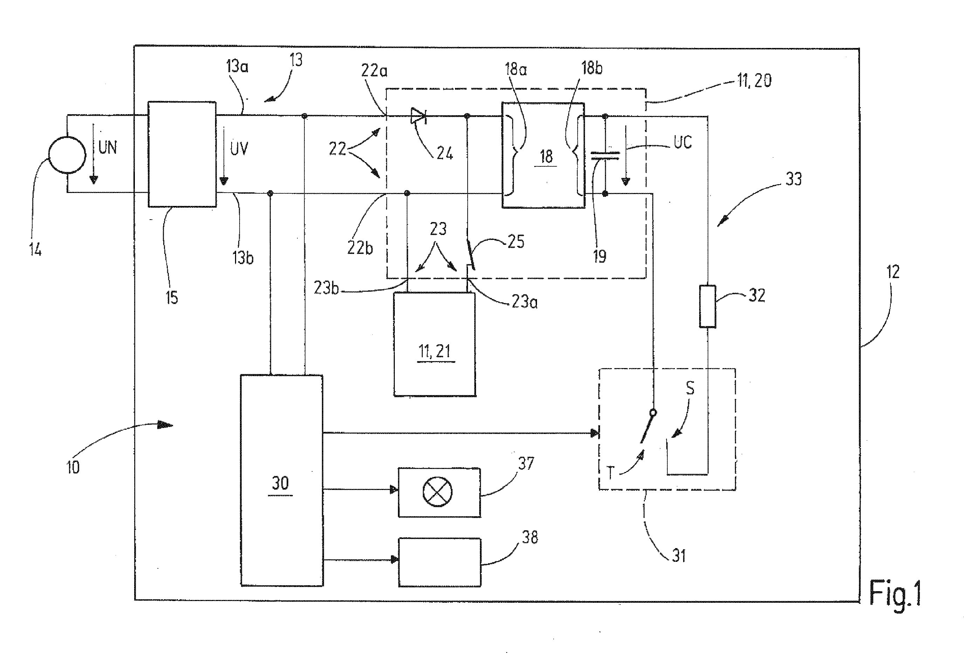

Figur 1 zeigt ein Blockschaltbild eines ersten Ausführungsbeispiels einer Sicherheitsschaltung 10 für wenigstens ein elektrisches Betriebmittel 11, das in einem explosionsgeschützten Gehäuse 12 gemeinsam mit der Sicherheitsschaltung 10 angeordnet ist. Das explosionsgeschützte Gehäuse 12 kann im Prinzip in jeder beliebigen Zündschutzart ausgeführt sein. Beim Ausführungsbeispiel ist das Gehäuse 12 in der Zündschutzart druckfeste Kapselung (Ex-d) oder Überdruckkapselung (Ex-p) ausgeführt.

Zur Versorgung der elektrischen Betriebsmittel 11 mit elektrischer Energie ist ein Versorgungseingang 13 am oder im Gehäuse 12 vorhanden. Der Versorgungseingang 13 weist beispielsgemäß einen ersten Versorgungsanschluss 13a sowie einen zweiten Versorgungsanschluss 13b auf. Am Versorgungseingang 13 und beispielsgemäß zwischen den beiden Versorgungsanschlüssen 13a, 13b kann eine Versorgungsspannung UV bereitgestellt werden. Die Versorgungsspannung UV kann beispielsweise entweder unmittelbar durch eine Netzspannung UN einer Netzspannungsquelle 14 gebildet sein, so dass bei verfügbarer Netzspannung UN eine Versorgungsspannung UV bereitgestellt ist. Alternativ hierzu kann zwischen der Netzspannungsquelle und dem Versorgungseingang 13 eine Versorgungseinrichtung 15 zwischengeschaltet sein. Beispielsweise bei explosionsgeschützten Gehäusen 12 in Form von Überdruckkapselungen stellt die Versorgungseinrichtung 15 die Versorgungsspannung UV erst dann bereit, wenn sich das Gehäuse 12 im Zustand der Überdruckkapselung befindet, nachdem der Gehäuseinnenraum mit einem Inertgas gespült wurde. Die Versorgungseinrichtung 15 kann alternativ oder zusätzlich auch zur Wandlung der Netzspannung UN in eine Gleich- oder ein- oder mehrphasige Wechselspannung als Versorgungsspannung UV dienen.

Eine solche Versorgungseinrichtung 15 ist somit nicht für alle Zündschutzarten des Gehäuses 12 bzw. alle elektrischen Betriebsmittel 11 notwendig und mithin optional.

Zumindest eines der im Gehäuse 12 vorhandenen elektrischen Betriebsmittel 11 weist wenigstens einen Kondensator 19 auf. Beim Ausführungsbeispiel gemäß Figur 1 ist eines der elektrischen Betriebsmittel 11 als Spannungsversorgungseinrichtung 20 und beispielsgemäß als unterbrechungsfreie Spannungsversorgungseinrichtung ausgeführt. Der wenigstens eine Kondensator 19 dient dabei als Pufferspeicher für elektrische Energie zur Versorgung einer elektrischen Last 21, die somit ein zu versorgendes elektrisches Betriebsmittel 11 im Gehäuse 12 darstellt.

In Figur 1 ist die Spannungsversorgungseinrichtung 20 lediglich schematisch mit einem Kondensator 19 veranschaulicht. In der Regel wird eine Kondensatorbank verwendet, die mehrere in Reihe und/oder parallel zueinander geschaltete einzelne Kondensatoren aufweist. Der dargestellte Kondensator 19 ist lediglich als Symbol für einen oder mehrere in Reihe und/oder parallel zueinander geschaltete Kondensatoren zu sehen.

Die Spannungsversorgungseinrichtung 20 kann beispielsweise einen Wandler 18 aufweisen, der abhängig vom Anwendungsfall eine beliebige Wandlertopologie aufweisen kann. Der Wandler 18 ist beispielsgemäß als bidirektionaler Wandler ausgeführt. Bei dem Ausführungsbeispiel nach Figur 1 wird durch die Versorgungseinrichtung 15 eine Gleichspannung als Versorgungsspannung UV bereitgestellt. Der Wandler 18 ist in diesem Fall als DC-DC-Wandler ausgeführt.

Die Spannungsversorgungseinrichtung 20 weist einen Eingang 22 auf, der mit dem Versorgungseingang 13 elektrisch verbunden ist. Der Eingang 22 hat beim Ausführungsbeispiel einen ersten Eingangsanschluss 22a, der mit dem ersten Versorgungsanschluss 13a verbunden ist. Ein zweiter Eingangsanschluss 22b des Eingangs 22 ist mit dem zweiten Versorgungsanschluss 13b verbunden. An einen Ausgang 23 der Spannungsversorgungseinrichtung 20 ist die Last 21 angeschlossen. Der Ausgang 23 ist elektrisch mit dem Eingang 22 verbunden. Beispielsgemäß ist der zweite Eingangsanschluss 22b unmittelbar mit einem zweiten Ausgangsanschluss 23b des Ausgangs 23 verbunden, so dass die beiden Anschlüsse 22b, 23b auf demselben elektrischen Potenzial liegen. Der erste Eingangsanschluss 22a ist über eine Diode 24 und einen Lastschalter 25 mit einem ersten Ausgangsanschluss 23a des Ausgangs 23 verbunden. Außerdem ist der Wandler 18 mit ersten Wandleranschlüssen 18a elektrisch mit dem Eingang 22 und dem Ausgang 23 verbunden. Beispielsgemäß ist der erste Eingangsanschluss 22a über die Diode 24 mit einem der beiden ersten Wandleranschlüsse 18a verbunden. Der andere der ersten Wandleranschlüsse 18a liegt auf demselben Potential wie der zweite Eingangsanschluss 22b und der zweite Ausgangsanschluss 23b. An zweiten Wandleranschlüssen 18b ist der wenigstens eine Kondensator 19 angeschlossen. Der Wandler 18 arbeitet bidirektional. Er kann den wenigstens einen Kondensator 19 bei einer am Eingang 22 anliegenden Versorgungsspannung UV laden, so dass an dem wenigstens einen Kondensator 19 eine Kondensatorspannung UC anliegt. Bei abgeschalteter Versorgungsspannung UV kann der Wandler 18 durch Entladen des wenigstens einen Kondensators 19 an seinen ersten Wandleranschlüssen 18a eine Spannung für die Last 21 bereitstellen. Somit kann über die Spannungsversorgungseinrichtung 20 die Last 21 zumindest eine Zeit lang mit elektrischer Energie aus dem wenigstens einen Kondensator 19 versorgt werden, wenn die Versorgungsspannung UV abgeschaltet ist.

Die den elektrischen Betriebsmitteln 11 zugeordnete Sicherheitsschaltung 10 weist eine Steuereinheit 30 auf. Die Steuereinheit 30 ist an den Versorgungseingang 13 angeschlossen. Dadurch kann die Steuereinheit 30 feststellen, ob die Versorgungsspannung UV bereitgestellt ist oder nicht, also ob die Versorgungsspannung UV eingeschaltet oder abgeschaltet ist. Ein Abschalten der Versorgungsspannung UV kann entweder darauf zurückzuführen sein, dass die Netzspannung UN nicht verfügbar ist oder - sofern eine Versorgungseinrichtung 15 vorhanden ist - dass die Versorgungseinrichtung 15 keine Versorgungsspannung UV bereitstellt. Dies kann durch einen Defekt in der Versorgungseinrichtung 15 oder bei einem überdruckgekapselten Gehäuse 12 der Fall sein, wenn der Zustand der Überdruckkapselung nicht vorliegt.

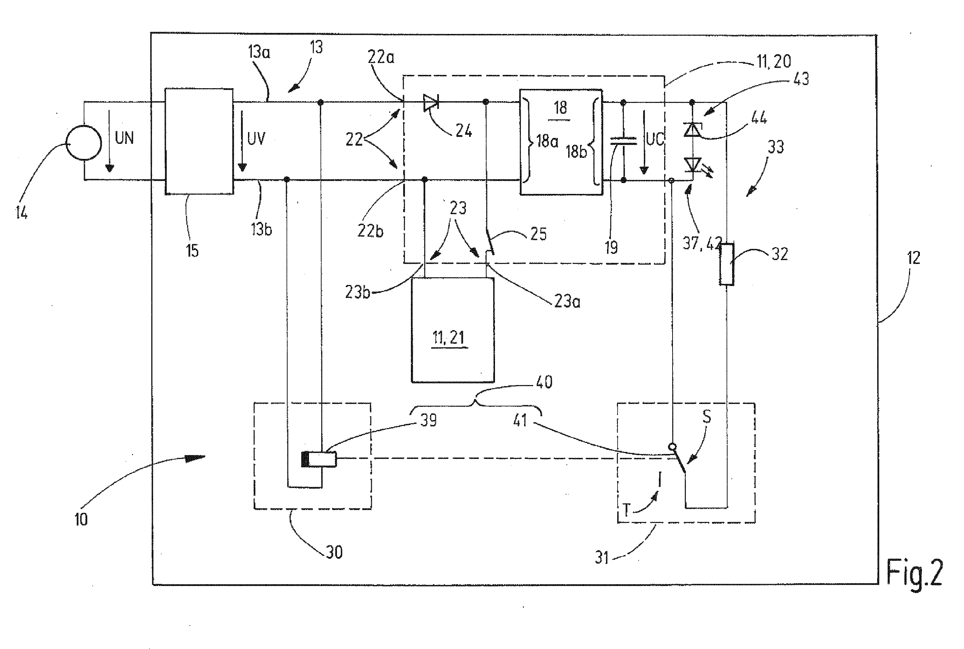

Die Steuereinheit 30 steuert einen gesteuerten Schalter 31 an. Der gesteuerte Schalter 31 kann mittels der Steuereinheit 30 zwischen einer Schließstellung S und einer Trennstellung T umgeschaltet werden. In Figur 1 ist die Trennstellung T veranschaulicht, während beispielsweise die Figuren 2 bis 4 die Schließstellung S des gesteuerten Schalters 31 zeigen. Der gesteuerte Schalter 31 ist in Reihe zu einem Entladungswiderstand 32 geschaltet. Diese Reihenschaltung aus gesteuertem Schalter 31 und Entladungswiderstand 32 ist an die beiden Anschlüsse des wenigstens einen Kondensators 19 angeschlossen und bildet gemeinsam mit dem wenigstens einen Kondensator 19 einen Entladungsstromkreis 33. In der Trennstellung T ist der Entladungsstromkreis 33 unterbrochen, so dass der wenigstens eine Kondensator 19 nicht über den Entladungswiderstand 32 entladen werden kann und kein Entladungsstrom fließt. Befindet sich der gesteuerte Schalter 31 in seiner Schließstellung S, ist der Entladungsstromkreis 33 geschlossen und der wenigstens eine Kondensator 19 wird durch einen im Entladungsstromkreis 33 fließenden Entladungsstrom entladen.

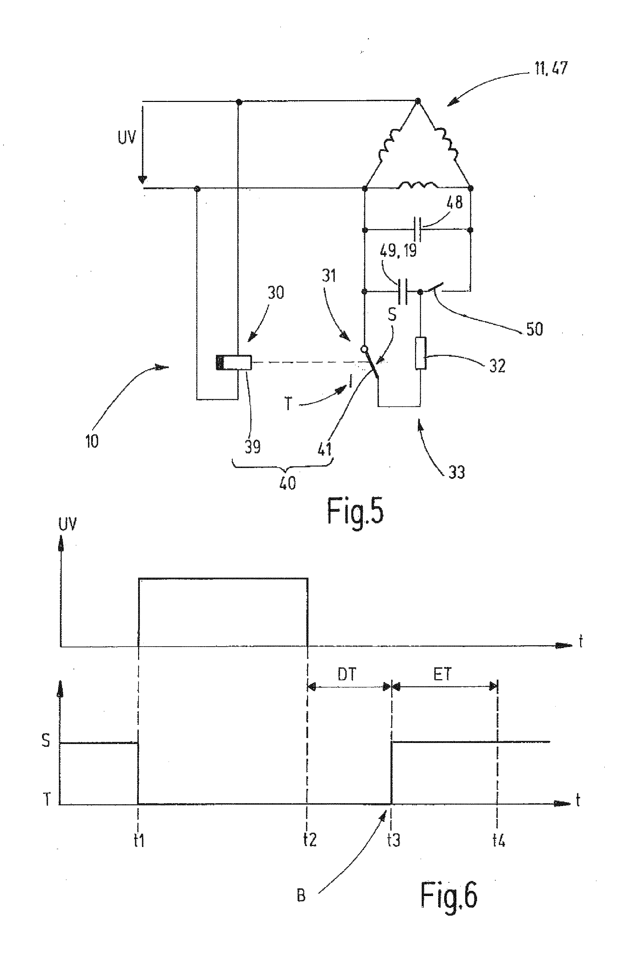

Die Funktionsweise der Sicherheitsschaltung 10 gemäß dem Ausführungsbeispiel nach Figur 1 wird anhand von Figur 6 nachfolgend erläutert.

Es sei zunächst angenommen, dass keine Versorgungsspannung UV am Versorgungseingang 13 bereitgestellt wird. Der gesteuerte Schalter 31 befindet sich in einer Ruhelage, die der Schließstellung S entspricht. Zu einem ersten Zeitpunkt t1 wird am Versorgungseingang 13 die Versorgungsspannung UV eingeschaltet, beispielsweise durch die Versorgungseinrichtung 15 oder durch das Bereitstellen einer Netzspannung UN. Die Steuereinheit 30 erkennt das Bereitstellen der Versorgungsspannung UV und schaltet den gesteuerten Schalter 31 unverzüglich in seine Trennstellung T um. Unter dem unverzüglichen Umschalten ist zu verstehen, dass das Umschalten ohne eine gewollte Zeitverzögerung erfolgt. Allerdings kann abhängig von den eingesetzten technischen Mitteln das Umschalten eine gewisse Zeit benötigen.

Befindet sich der gesteuerte Schalter 31 in seiner Trennstellung T, kann der wenigstens eine Kondensator 19 über die am Versorgungseingang 13 bereitgestellte elektrische Energie auf eine Kondensatorspannung UC geladen werden. Dies geschieht beim Ausführungsbeispiel über den Wandler 18. Die Last 21 wird bei verfügbarer Versorgungsspannung UV direkt über die elektrische Energie am Versorgungseingang 13 unabhängig vom Wandler 18 bzw. dem wenigstens einen Kondensator 19 versorgt.

Es sei weiter angenommen, dass zu einem zweiten Zeitpunkt t2 die Versorgungsspannung UV abgeschaltet wird. Abhängig davon, um was für ein Betriebsmittel 11 es sich bei der elektrischen Last 21 handelt, kann es notwendig sein, die Versorgung der Last 21 mit elektrischer Energie für einen vorbestimmten Zeitraum aufrechtzuerhalten, um die Last 21 in einen definierten oder sicheren Zustand zu bringen. Zu diesem Zweck stellt die Spannungsversorgungseinrichtung 20 nach dem Abschalten der Versorgungsspannung UV elektrische Energie aus dem wenigstens einen Kondensator 19 für die Last 21 zur Verfügung. Um die Energieversorgung der Last 21 nach dem Abschalten der Versorgungsspannung UV nicht zu gefährden, schaltet die Steuereinheit 30 den gesteuerten Schalter 31 nach dem Erkennen des Abschaltens der Versorgungsspannung UV zum zweiten Zeitpunkt t2 beim Ausführungsbeispiel nicht sofort in die Schließstellung S um, sondern erst dann, wenn eine vorgegebene Umschaltbedingung B erfüllt ist. Beispielsweise kann die Umschaltbedingung B erfüllt sein, wenn seit dem Erkennen des Abschaltens der Versorgungsspannung UV eine vorgegebene Verzögerungszeitdauer DT abgelaufen ist. Nach dem Erfüllen der Umschaltbedingung B schaltet die Steuereinheit 30 den gesteuerten Schalter 31 dann von der Trennstellung T in die Schließstellung S um, was gemäß Figur 6 zu einem dritten Zeitpunkt t3 erfolgt.

Nach dem Ablauf der vorgegebenen Verzögerungszeitdauer DT zum dritten Zeitpunkt t3 kann die Last 21 durch Öffnen des Lastschalters 25 von der Versorgung mit elektrischer Energie aus dem wenigstens einen Kondensator 19 abgetrennt werden.

Der Entladungsstromkreis 33 ist ab dem dritten Zeitpunkt t3 geschlossen und der wenigstens eine Kondensator 19 wird über einen Entladungsstrom durch den Entladungswiderstand 32 entladen. Die Entladungsdauer ET, die benötigt wird, die in dem wenigstens einen Kondensator 19 gespeicherte elektrische Energie auf ein Niveau zu reduzieren, das ein ungefährdetes Öffnen des Gehäuses 12 in der explosionsgefährdeten Atmosphäre ermöglicht, kann anhand der charakteristischen elektrische Werte der Bauteile im Entladungsstromkreis 33 ermittelt werden. Diese Entladungsdauer ET hängt beispielsweise von der maximalen Kondensatorspannung UC, vom Ohmschen Widerstandswert des Entladungswiderstands 32, vom maximal zulässigen Entladungsstrom, von der Selbstentladung des wenigstens einen Kondensators 19, von der Kapazität des wenigstens einen Kondensators 19 und weiteren Parametern ab. Die Entladungsdauer ET beginnt mit dem Umschalten des gesteuerten Schalters 31 in die Schließstellung S zum dritten Zeitpunkt t3 und endet zu einem vierten Zeitpunkt t4. Nach dem vierten Zeitpunkt t4 kann das Gehäuse 12 gefahrlos geöffnet werden. Die in dem wenigstens einen Kondensator 19 möglicherweise noch vorhandene, gespeicherte elektrische Energie ist ausreichend gering, um ein Zünden der explosionsgefährdeten Atmosphäre außerhalb des explosionsgeschützten Gehäuses 12 auszuschließen.

Die Zeitdauer, die verstreichen muss, um das Gehäuse 12 gefahrlos öffnen zu können, nach dem die Versorgungsspannung UV abgeschaltet wurde, kann als Information außen am Gehäuse 12 angebracht werden. Beim Ausführungsbeispiel ist diese Zeitdauer aus der Summe der Verzögerungszeitdauer DT und der Entladungsdauer ET gebildet.

Alternativ oder zusätzlich kann das Ende der Entladungsdauer ET zum vierten Zeitpunkt t4 der Bedienperson auch angezeigt werden, beispielsweise akustisch und/oder optisch. Die Sicherheitsschaltung 10 kann optional ein entsprechendes Anzeigemittel 37 aufweisen, das von der Steuereinheit 30 angesteuert wird. Alternativ oder zusätzlich kann die Steuereinheit 30 auch ein Verriegelungsmittel 38 ansteuern. Über das Verriegelungsmittel 38 kann eine Tür, eine Klappe, ein Deckel oder dergleichen des Gehäuses 12 verriegelt und erst dann freigegeben werden, wenn die Entladungsdauer ET abgelaufen ist.

In Figur 2 ist ein weiteres Ausführungsbeispiel der Sicherheitsschaltung 10 veranschaulicht. Im Wesentlichen entspricht das Ausführungsbeispiel nach Figur 2 dem Ausführungsbeispiel gemäß Figur 1, wie vorstehend erläutert. Insoweit wird nachfolgend lediglich auf die Unterschiede eingegangen und im Übrigen auf die vorstehende Beschreibung verwiesen.

Die Steuereinheit 30 ist bei dem Ausführungsbeispiel nach Figur 2 durch den Steuerungsteil 39 eines Relais 40 gebildet. Die Arbeitskontakte 41 dieses Relais 40 bilden den gesteuerten Schalter 31. Bei einem herkömmlichen elektromagnetischen Relais 40 weist der Steuerungsteil 39 eine Spule auf, die über einen Anker die Arbeitskontakte 41 betätigt.

Wie in Figur 2 im Schaltbild des Relais 40 angedeutet, handelt es sich um ein zeitgesteuertes Relais 40, das beim Ausführungsbeispiel abfallverzögert ist. Beim Anliegen einer Versorgungsspannung UV wird der gesteuerte Schalter 31 in seine Trennstellung T geschaltet und gehalten. Liegt keine Versorgungsspannung UV am Steuerungsteil 39 des Relais 40 an, erfolgt ein Umschalten des gesteuerten Schalters 31 bzw. der Arbeitskontakte 41 nicht unmittelbar, sondern zeitverzögert von der Trennstellung T in die Schließstellung S. Durch diese Zeitverzögerung wird die vorgegebene Verzögerungszeitdauer DT realisiert. Die Verzögerungszeitdauer DT ist bei dem Relais 40 veränderbar bzw. einstellbar.

Die Sicherheitsschaltung 10 weist beim Ausführungsbeispiel nach Figur 2 auch ein Anzeigemittel 37 und beispielsgemäß ein optisches Anzeigemittel 37, beispielsweise eine Leuchtdiode 42 auf. Die Leuchtdiode 42 ist, wie in Figur 2 veranschaulicht, beispielsgemäß in einen Parallelzweig 43 parallel zu dem wenigstens einen Kondensator 19 geschaltet. In Reihe zur Leuchtdiode 42 kann eine Zenerdiode 44 im Parallelzweig 43 angeordnet sein.

Solange die Kondensatorspannung UC während des Entladens bei in Schließstellung S befindlichen gesteuerten Schalter 31 ausreichend groß ist, fließt ein Strom durch den Parallelzweig 43 und die Leuchtdiode 42. Ist die Kondensatorspannung UC und mithin die elektrische Ladung des wenigstens einen Kondensators 19 nach Ablauf der Entladungsdauer ET ausreichend klein, sperrt die Zenerdiode 44 und die Leuchtdiode 42 erlischt. Somit kann einer Bedienperson durch Erlöschen der Leuchtdiode 42 das Ende der Entladungsdauer ET angezeigt werden.

Es versteht sich, dass abweichend zu dem Ausführungsbeispiel gemäß Figur 2 auch ein anderes Anzeigemittel 37 verwendet werden kann.

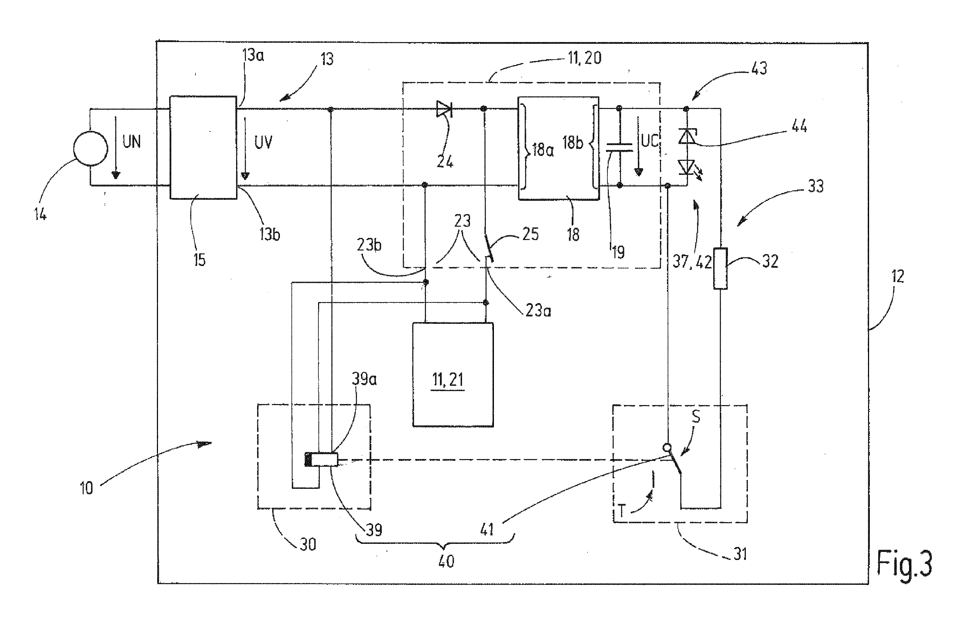

In Figur 3 ist eine Abwandlung des zweiten Ausführungsbeispiels gemäß Figur 2 veranschaulicht. Der einzige Unterschied besteht darin, dass der Steuerungsteil 39 des Relais 40 einen zusätzlichen Steuereingang 39a aufweist, der mit dem Versorgungseingang 13 und beispielsgemäß dem ersten Versorgungsanschluss 13a elektrisch verbunden ist. Während die beiden anderen Anschlüsse des Steuerteils 39 bei den vorherigen Ausführungsbeispielen jeweils mit einem Versorgungsanschluss 13a bzw. 13b verbunden waren, sind diese nunmehr mit den Ausgangsanschlüssen 23a, 23b der Spannungsversorgungseinrichtung 20 verbunden. An diesen Anschlüssen liegt die Versorgungsspannung UV nur dann an, wenn auch der Lastschalter 25 geschlossen ist. Unabhängig von der Stellung des Lastschalters 25 wird der gesteuerte Schalter 31, der durch die Arbeitskontakte 41 des Relais 40 gebildet ist, erst dann in seine Schließstellung S zum Entladen des wenigstens einen Kondensators 19 umgeschaltet, wenn am Steuereingang 39a die Versorgungsspannung UV nicht mehr anliegt und die Umschaltbedingung B, also die vorgegebene Verzögerungszeitdauer DT abgelaufen ist. Die Verzögerungszeitdauer DT kann bei diesem Ausführungsbeispiel gleich null sein, wenn die Versorgungsspannung UV bei geöffnetem Lastschalter 25 angeschaltet wird, da in diesem Fall eine weitere Versorgung des Betriebsmittels 11 bzw. der Last 21 ohnehin nicht möglich ist. Die Funktionsweise der Sicherheitsschaltung 10 entspricht der des zweiten Ausführungsbeispiels nach Figur 2, so dass auf die vorstehende Beschreibung verwiesen wird.

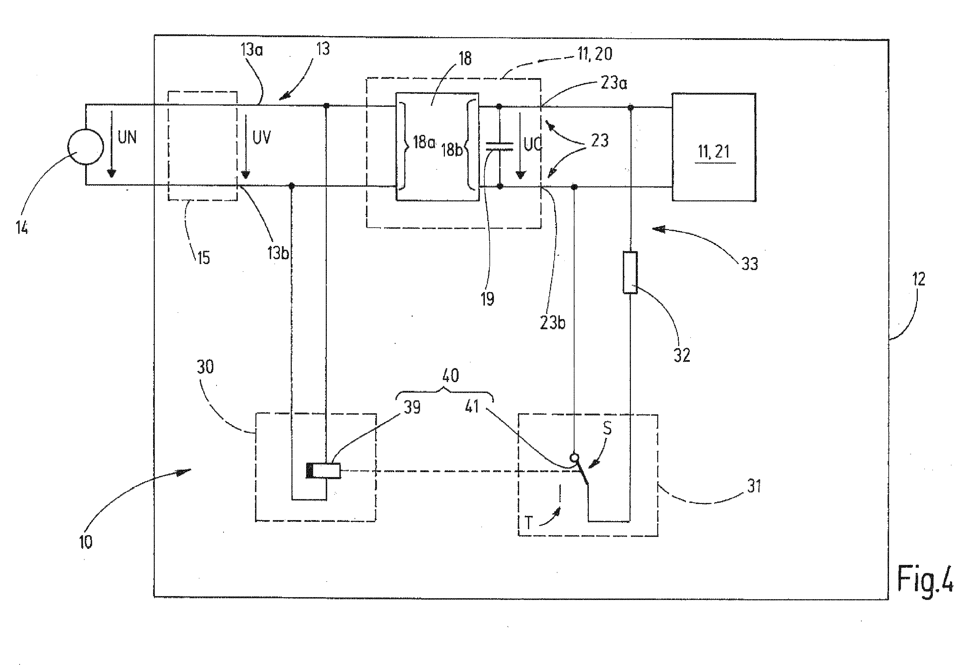

In Figur 4 ist ein Blockschaltbild veranschaulicht, das eine abgewandelte Ausführungsform der Spannungsversorgungseinrichtung 20 aufweist. Der Wandler 18 der Spannungsversorgungseinrichtung 20 ist als unidirektionaler Wandler ausgeführt. Er wandelt die an den ersten Wandleranschlüssen 18a anliegende Versorgungsspannung UV in eine Ausgangsspannung an den zweiten Wandleranschlüssen 18b, die an dem wenigstens einen Kondensator 19 anliegt. Der Ausgang 23 der Spannungsversorgungseinrichtung 20 ist mit den zweiten Wandleranschlüssen 18b verbunden. Zwischen dem ersten Ausgangsanschluss 23a und dem zweiten Ausgangsanschluss 23b liegt die Kondensatorspannung UC an. Der Wandler 18 kann hier beispielsweise als AC-DC-Wandler ausgeführt sein. Als Versorgungsspannung UV kann in diesem Fall unmittelbar die Netzspannung UN an die ersten Wandleranschlüsse 18a angelegt werden.

Die Sicherheitsschaltung 10 entspricht den Ausführungsbeispielen gemäß der Figuren 1 oder 2. Die in Figur 2 veranschaulichten Anzeigemittel 37 können auch bei diesem Ausführungsbeispiel nach Figur 4 optional vorgesehen werden. Die Funktionsweise entspricht den vorstehend erläuterten Ausführungsformen.

In Figur 5 ist ein weiteres Ausführungsbeispiel eines Betriebsmittels 11 dargestellt, das durch einen Elektromotor 47 gebildet ist. Dem Elektromotor 47 ist in an sich bekannter Weise ein Betriebskondensator 48 sowie ein Anlaufkondensator 49 zugeordnet, wobei der Anlaufkondensator 49 den wenigstens einen Kondensator 19 darstellt. In Reihe zum Anlaufkondensator 49 ist ein Anlaufschalter 50 geschaltet. Die Reihenschaltung aus Anlaufkondensator 49 und Anlaufschalter 50 ist parallel zum Betriebskondensator 48 und parallel zu einer Wicklung des Elektromotors 47 geschaltet. Der Entladungsstromkreis 33 ist wie bei den anderen Ausführungsbeispielen durch den Kondensator 19, also den Anlaufkondensator 49, den gesteuerten Schalter 31 und den Entladungswiderstand 32 gebildet.

Zum Anlaufen des Elektromotors 47 wird der Anlaufschalter 50 geschlossen und der Anlaufkondensator 49 geladen. Nach dem Anlaufen des Elektromotors 47 wird der Anlaufschalter 50 geöffnet. Dabei kann der Anlaufkondensator 49 ganz oder teilweise geladen sein. Diese Ladung auf dem Anlaufkondensator 49 bleibt auch dann erhalten, wenn die Versorgungsspannung UV abgeschaltet wird. Demgegenüber kann sich der Betriebskondensator 48 über die Wicklungen des Elektromotors 47 entladen. Wegen des geöffneten Anlaufschalters 50 ist dies für den Anlaufkondensator 49 nicht möglich. Zum Entladen des Anlaufkondensators 49 wird daher analog zu dem im Zusammenhang mit den anderen Ausführungsbeispielen beschriebenen Verfahren der gesteuerte Schalter 41 in seine Schließstellung S umgeschaltet, so dass über den Entladungswiderstand 32 ein Entladungsstrom fließt und den Anlaufkondensator 49 entlädt.

Um auch ein definiertes Entladen des Betriebskondensators 48 zu erreichen, kann gleichzeitig mit dem gesteuerten Schalter 31 auch der Lastschalter 50 in seinen leitenden Zustand umgeschaltet werden, so dass auch der Betriebskondensator 48 parallel zum Anlaufkondensator 49 in den Entladungsstromkreis 33 geschaltet ist. Ansonsten führt die Sicherheitsschaltung 10 gemäß Figur 5 dieselbe Funktion aus, wie bei den zuvor beschriebenen Ausführungsbeispielen.

Die nachfolgend beschriebenen Abwandlungen sind bei allen zuvor beschriebenen Ausführungsbeispielen verwendbar.

Es versteht sich, dass in Abwandlung zu einer Spannungsversorgungseinrichtung 20 und einem Elektromotor 47 auch andere elektrische Betriebsmittel 11 in dem explosionsgeschützten Gehäuse 12 angeordnet sein können. Die Sicherheitsschaltung 10 kann für alle elektrischen Betriebsmittel 11 verwendet werden, die wenigstens einen Kondensator 19 aufweisen, bzw. denen wenigstens ein Kondensator 19 zugeordnet ist.

Der Entladungswiderstand 32 ist bei den Ausführungsbeispielen in den Blockschaltbildern als ein Bauelement veranschaulicht. Im einfachsten Fall kann Entladungswiderstand 32 durch einen einzigen Ohmschen Widerstand gebildet sein. In Abwandlung hierzu ist es auch möglich, eine Anordnung von Bauteilen zu verwenden, die einen Entladungswiderstand 32 bilden.

Die Entladung des wenigstens einen Kondensators 19 durch den Entladungsstromkreis 33 kann auch parameterabhängig verändert werden. Beispielsweise kann der Entladungswiderstand 32 als temperaturabhängiger Widerstand mit vorzugsweise positiven Temperaturkoeffizienten (PTC) ausgeführt und thermisch mit dem wenigstens einen Kondensator 19 gekoppelt sein. Steigt die Temperatur des wenigstens einen Kondensators 19 aufgrund eines großen Entladungsstromes an, kann der Entladungsstrom durch einen Entladungswiderstand 32 mit positiven Temperaturkoeffizienten (PTC) bei zunehmender Temperatur verringert werden, was einer weiteren Temperaturerhöhung entgegenwirkt. Dadurch kann eine unerwünscht hohe Temperatur des wenigstens einen Kondensators 19 vermieden werden.

Bei einem anderen Ausführungsbeispiel kann der Entladungswiderstand 32 auch spannungsabhängig von der Kondensatorspannung UC veränderbar sein.

Ferner kann das optische und/oder akustische Anzeigemittel 37 und/oder die Verriegelungsmittel 38 bei allen Ausführungsbeispielen verwendet werden. Das Anzeigemittel 37 und/oder das Verriegelungsmittel 38 kann wie in Figur 1 veranschaulicht durch die Steuereinheit 30 angesteuert werden. Alternativ hierzu besteht auch die Möglichkeit, die Kondensatorspannung UC und/oder den Entladungsstrom durch den Entladungsstromkreis 33 zur Steuerung des Zustands des Anzeigemittels 37 und/oder des Verriegelungsmittels 38 zu verwenden.

In Abwandlung zu den Figuren 2 und 3 ist es auch möglich, das Anzeigemittel 37 in Reihe zum Entladungswiderstand 32 zu schalten. Beispielsweise würde eine Leuchtdiode 42 dann erlöschen, wenn kein Entladungsstrom bzw. kein ausreichender Entladungsstrom mehr durch den Entladungsstromkreis 33 fließt.

In einer weiteren Abwandlung der Ausführungsbeispiele kann eine zusätzliche Umschaltbedingung B für das Umschalten des gesteuerten Schalters 31 von seiner Trennstellung T in seine Schließstellung S auch entfallen. Der gesteuerte Schalter 31 kann mithin unverzüglich nach dem Abschalten der Versorgungsspannung UV in seine Schließstellung S umgeschaltet werden.

Die Erfindung betrifft eine Sicherheitsschaltung 10 zur Verwendung in einem explosionsgeschützten Gehäuse 12. Die Sicherheitsschaltung 10 dient zur Entladung einer Kondensatoranordnung mit wenigstens einem Kondensator 19, der einem elektrischen Betriebsmittel 11 zugeordnet ist oder zu dem elektrischen Betriebsmittel 11 gehört. Über die Sicherheitsschaltung 10 wird der wenigstens eine Kondensator 19 nach dem Abschalten einer Versorgungsspannung UV an einem Versorgungseingang 13 über einen Entladungsstromkreis 33 während einer Entladungszeitdauer ET definiert entladen. Nach dem Ende der Entladungszeitdauer ET ist die elektrische Ladung bzw. die elektrische Energie des wenigstens einen Kondensators 19 ausreichend klein, dass ein Zünden der explosionsgefährdeten Atmosphäre in der Umgebung des explosionsgeschützten Gehäuses 12 ausgeschlossen ist.

### Bezugszeichenliste:

- 10: Sicherheitsschaltung
- 11: elektrisches Betriebsmittel
- 12: explosionsgeschütztes Gehäuse
- 13: Versorgungseingang
- 13a: erster Versorgungsanschluss
- 13b: zweiter Versorgungsanschluss
- 14: Netzspannungsquelle
- 15: Freigabeeinrichtung

- 18: Wandler
- 18a: erster Wandleranschluss
- 18b: zweiter Wandleranschluss
- 19: Kondensator
- 20: Spannungsversorgungseinrichtung
- 21: elektrische Last
- 22: Eingang
- 22a: erster Eingangsanschluss
- 22b: zweiter Eingangsanschluss
- 23: Ausgang
- 23a: erster Ausgangsanschluss
- 23b: zweiter Ausgangsanschluss
- 24: Diode
- 25: Lastschalter

- 30: Steuereinheit
- 31: gesteuerter Schalter
- 32: Entladungswiderstand
- 33: Entladungsstromkreis

- 37: Anzeigemittel
- 38: Verriegelungsmittel
- 39: Steuerteil
- 39a: Steuereingang
- 40: Relais
- 41: Arbeitskontakte
- 42: Leuchtdiode
- 43: Parallelzweig

- 47: Elektromotor
- 48: Betriebskondensator
- 49: Anlaufkondensator
- 50: Anlaufschalter

- B: Umschaltbedingung
- DT: Verzögerungszeitdauer
- ET: Entladungsdauer
- S: Schließstellung
- T: Trennstellung
- UC: Kondensatorspannung
- UN: Netzspannung
- UV: Versorgungsspannung

## Patentansprüche

1. Sicherheitsschaltung (10) für ein explosionsgeschütztes Gehäuse (12),
mit einer Steuereinheit (30), die an einen Versorgungseingang (13) angeschlossen ist, an dem eine Versorgungsspannung (UV) für ein im explosionsgeschützten Gehäuse (12) angeordnetes elektrisches Betriebsmittel (11) bereitgestellt wird,
wobei das elektrische Betriebsmittel (11) wenigstens einen Kondensator (19) aufweist, der mit dem Versorgungseingang (13) und/oder mit einem elektrischen Betriebsmittel (11) verbunden ist und sich bei eingeschalteter Versorgungsspannung (UV) und/oder beim Einschalten oder Betreiben des elektrischen Betriebsmittels (11) auf eine Kondensatorspannung (UC) auflädt,
mit einer Reihenschaltung aus einem gesteuerten Schalter (31) und einem Entladungswiderstand (32), die an den wenigstens einen Kondensator (19) angeschlossen ist und mit dem wenigstens einen Kondensator (19) einen Entladungsstromkreis (33) bildet,
wobei der gesteuerte Schalter (31) in einer Trennstellung (T) den Entladungsstromkreis (33) unterbricht und in einer Schließstellung (S) den Entladungsstromkreis (33) schließt,
wobei die Steuereinheit (30) dazu eingerichtet ist, den gesteuerte Schalter (31) nach einem Abschalten der Versorgungsspannung (UV) in die Schließstellung (S) umzuschalten.

2. Sicherheitsschaltung nach Anspruch 1,
**dadurch gekennzeichnet, dass** die Steuereinheit (30) dazu eingerichtet ist, den gesteuerten Schalter (31) nach dem Abschalten der Versorgungsspannung (UV) erst dann in die Schließstellung (S) umzuschalten, wenn eine Umschaltbedingung (B) erfüllt ist.

3. Sicherheitsschaltung nach Anspruch 2,
**dadurch gekennzeichnet, dass** die Umschaltbedingung (B) erfüllt ist, wenn seit dem Abschalten der Versorgungsspannung (UV) eine vorgegebene Zeitdauer (DT) abgelaufen ist und/oder wenn vom Betriebsmittel (11) ein Rückmeldesignal an die Steuereinheit (30) erfolgt, das anzeigt, dass das Betriebsmittel (11) eine Versorgung mit elektrischer Energie nicht länger benötigt.

4. Sicherheitsschaltung nach Anspruch 1,
**dadurch gekennzeichnet, dass** die Steuereinheit (30) dazu eingerichtet ist, den gesteuerten Schalter (31) unmittelbar nach dem Abschalten der Versorgungsspannung (UV) in die Schließstellung (S) umzuschalten.

5. Sicherheitsschaltung nach einem der vorhergehenden Ansprüche,
**dadurch gekennzeichnet, dass** die Steuereinheit (30) dazu eingerichtet ist, den gesteuerten Schalter (31) unmittelbar nach dem Einschalten der Versorgungsspannung (UV) in die Trennstellung (T) umzuschalten.

6. Sicherheitsschaltung nach einem der vorhergehenden Ansprüche,
**dadurch gekennzeichnet, dass** die Steuereinheit (30) einen Steuerungsteil (39) eines Relais (40) aufweist.

7. Sicherheitsschaltung nach Anspruch 6,
**dadurch gekennzeichnet, dass** der gesteuerte Schalter (31) die Arbeits- oder Lastkontakte (41) des Relais (40) aufweist, deren Schaltstellung vom Steuerungsteil (39) gesteuert wird.

8. Sicherheitsschaltung nach Anspruch 6 oder 7,
**dadurch gekennzeichnet, dass** das Relais (40) als zeitgesteuertes Relais ausgeführt ist.

9. Sicherheitsschaltung nach einem der vorhergehenden Ansprüche,
**dadurch gekennzeichnet, dass** der wenigstens eine Kondensator (19) Bestandteil einer Spannungsversorgungseinrichtung (20) ist.

10. Sicherheitsschaltung nach Anspruch 9,
**dadurch gekennzeichnet, dass** die Spannungsversorgungseinrichtung (20) als unterbrechungsfreie Spannungsversorgung ausgeführt ist und der wenigstens eine Kondensator (19) einen Energiepufferspeicher bildet.

11. Sicherheitsschaltung nach einem der vorhergehenden Ansprüche,
**dadurch gekennzeichnet, dass** der wenigstens eine Kondensator (19) einem Elektromotor (47) als Anlaufkondensator (49) zugeordnet ist.

12. Verfahren zum Betreiben einer Sicherheitsschaltung (10) für ein explosionsgeschütztes Gehäuse (12), in dem ein elektrisches Betriebsmittel (11) angeordnet ist, mit einer Steuereinheit (30), die an einen Versorgungseingang (13) angeschlossen ist, mit wenigstens einem Kondensator (19), mit einer Reihenschaltung aus einem gesteuerten Schalter (31) und einem Entladungswiderstand (32), die an den wenigstens einen Kondensator angeschlossen ist und mit dem wenigstens einen Kondensator (19) einen Entladungsstromkreis (33) bildet, mit folgenden Schritten:
- Bereitstellen einer Versorgungsspannung (UV) an dem Versorgungseingang (13) oder Bereitstellen einer Versorgungsspannung (UV) an dem Versorgungseingang (13) und Einschalten oder Betreiben des elektrischen Betriebsmittels (11), wodurch sich der wenigstens eine Kondensator (19) auf eine Kondensatorspannung (UC) auflädt,
- Umschalten des gesteuerten Schalters (31) nach einem Abschalten der Versorgungsspannung (UV) in eine Schließstellung (S), in der er den Entladungsstromkreis (33) schließt.

13. Verfahren nach Anspruch 12,
**dadurch gekennzeichnet, dass** der gesteuerte Schalter (31) unmittelbar nach dem Einschalten der Versorgungsspannung (UV) in eine Trennstellung (T) umgeschaltet wird, in der er den Entladungsstromkreis (33) unterbricht.

14. Verfahren nach Anspruch 12 oder 13,
**dadurch gekennzeichnet, dass** der gesteuerte Schalter (31) unmittelbar nach dem Abschalten der Versorgungsspannung (UV) in die Schließstellung (S) umgeschaltet wird.

15. Verfahren nach Anspruch 12 oder 13,
**dadurch gekennzeichnet, dass** der gesteuerte Schalter (31) nach dem Abschalten der Versorgungsspannung (UV) erst dann in die Schließstellung (S) umgeschaltet wird, wenn eine Umschaltbedingung (B) erfüllt ist.
